# EUROPEAN PATENT SPECIFICATION

(11) **EP 4 203 469 B1**
(45) Date of publication and mention of the grant of the patent: **20.08.2025**
(21) Application number: 20950524.7
(22) Date of filing: 24.08.2020
(51) Int. Cl.: B60K 35/10, B60R 16/023, B60K 35/22, B60K 35/29, B60K 35/20

(54) **SIGNAL SENDING METHOD AND DEVICE**
SIGNALSENDEVERFAHREN UND -VORRICHTUNG
PROCÉDÉ ET DISPOSITIF D'ÉMISSION DE SIGNAUX

(43) Date of publication of application: 28.06.2023
(73) Proprietor: Shenzhen Yinwang Intelligent Technologies Co., Ltd., Shenzhen, Guangdong 518129 (CN)
(72) Inventor: WANG, Shaolong, Shenzhen, Guangdong 518129 (CN)
(74) Representative: Pfenning, Meinig & Partner mbB
(86) International application number: PCT/CN2020/110752
(87) International publication number: WO 2022/040849

(56) References cited:
- EP-A1- 3 043 562
- CN-A- 105 763 872
- CN-A- 110 718 198
- CN-A- 111 480 195
- CN-U- 205 453 978
- US-A1- 2019 181 982
- US-A1- 2020 198 466

## Description

### TECHNICAL FIELD

This invention relates to the field of vehicle terminal technologies, and the invention in particular relates to a signal sending method, a microprocessor, an instrument panel, a computer-readable storage medium, and a computer program product for controlling icon display on an instrument panel.

### BACKGROUND

In recent years, increasing devices such as automobile dashboards and event data recorders use liquid crystal panels to display pictures. As types and quantities of icons displayed on a liquid crystal panel increase, requirements on display safety of a liquid crystal display on the liquid crystal panel also increase. Key information about a vehicle body, such as a turn light, a fault warning light, and a gear shift light, needs to be displayed on the liquid crystal display in real time. If the information cannot be correctly displayed on the liquid crystal display, it is possible that a driver performs a wrong operation, which further affects personal safety and even causes a traffic accident.

A main reason why error information is displayed on the liquid crystal display is that a high-speed video signal transmitted by a vehicle host to the liquid crystal display is subjected to interference. For example, the liquid crystal display is one or more meters away from the host, and consequently the high-speed video signal sent by the host is subjected to interference from, for example, a strong electromagnetic environment in a transmission process, or when a strong magnetic substance is next to a cable between the vehicle host and the liquid crystal panel, signal transmission is also subjected to interference, and consequently a wrong icon is displayed on the liquid crystal display. Especially, if some key icons are wrongly displayed, for example, if a turn light indicates a wrong direction or no turn light is displayed, a driver's judgment is affected and a potential safety hazard is generated during driving.

US 2019/181982 Al discloses systems and method for error detection in automobile tell-tales are provided. An initial cyclic redundancy check (CRC) for a tell-tale to be calculated and stored at a primary control system within the vehicle. When a fault or condition is detected which generates the tell-tale, the primary control system passes video information to a display embedded control unit (ECU) along with the initial CRC. A circuit in the display ECU performs its own CRC calculation and compares the initial CRC to the calculated CRC. If there is not a match, then a fault indication may be provided to the primary control system for action by the primary control system. Still further, back up or fail-operational options may be invoked so that the tell-tale is provided to the operator.

EP 3 043 562 Al discloses a video encoding/decoding system that includes a video encoding device and a video decoding device. The video encoding device includes an encoding part for encoding a diagnostic image or normal image. The video decoding device includes a decoding part for decoding the image encoded by the encoding part, a check signal generation part for generating a check signal of the decoded image, a storage part for storing the expected value of the check signal of the diagnostic image or the check signal generated by the check signal generation part, and a comparison part for comparing the check signal stored in the storage part with the check signal generated by the check signal generation part, in order to detect failure in all the paths from the image input part of the video encoding device to the image output part of the video decoding device.

### SUMMARY

The object of the present application is to provide a signal sending method, a microprocessor, an instrument panel, a computer-readable storage medium, and a computer program product to resolve a problem that a wrong icon is displayed on a liquid crystal display due to environmental interference on a high-speed video signal in a transmission process. This object is solved by the attached independent claims and further embodiments and improvements of the invention are listed in the attached dependent claims.

According to the invention defined by the subject-matter of independent claim 1, the invention provides a signal sending method. When a user triggers an event of a first icon, an SOC of a vehicle host generates a high-speed serial signal and sends the high-speed serial signal to an instrument panel. The high-speed serial signal is used to transmit a window image corresponding to the first icon. The instrument panel includes a deserializer, an MCU, and a display. The method includes:

The MCU receives a first image signal sent by the deserializer, where the first image signal is obtained after the deserializer parses the high-speed serial signal sent by the vehicle host. The MCU obtains a first check value based on the first image signal. When detecting that the first check value is different from a second check value corresponding to the first icon, the MCU sends a second image signal to the display, where the second image signal is used to transmit a target window image including the first icon.

According to the method of the the invention, the MCU is added on an instrument panel side, and is configured to: detect whether the high-speed serial signal sent from a vehicle host side is subjected to environmental interference, and when detecting that the high-speed serial signal is subjected to environmental interference, send a normal image signal to the display, so that a normal icon is displayed on the display, to avoid displaying an image of a wrong icon on the instrument panel. This method improves accuracy of icon display on the instrument panel side, and ensures driving safety of a driver.

With reference to the first aspect, in a possible implementation of the first aspect, that the MCU obtains a first check value based on the first image signal includes: The MCU parses the first image signal to obtain a first image; and the MCU obtains a pixel value of each pixel in the first image, and performs cumulative calculation on all the pixel values in the first image, or performs a CRC on all the pixel values to obtain the first check value.

With reference to the invention, before the MCU detects that the first check value is different from the second check value corresponding to the first icon, the method further includes: The MCU obtains the second check value sent by the deserializer, where the second check value comes from the SOC of the vehicle host, and according to an embodiment may be generated by the SOC of the vehicle host based on a pixel value of each pixel in the window image corresponding to the first icon.

In this implementation, because the second check value sent by the vehicle host is a low-speed signal, and is basically not subjected to interference during transmission, the second check value is compared with the first check value, to accurately determine whether the high-speed serial signal sent from the vehicle host side is subjected to interference in a transmission process.

With reference to the first aspect, before the sending a second image signal to the display, the method further includes: obtaining the second image signal.

Further, the obtaining the second image signal includes: The MCU determines, by searching, whether a target window image corresponding to the second check value is locally stored, and if the target window image corresponding to the second check value is locally stored, the MCU obtains the target window image, and obtains the second image signal based on the target window image.

Optionally, the method further includes: If the MCU finds that the target window image is not locally stored, the MCU sends a third image signal to the display, where the third image signal is used to transmit a window image including an exception prompt icon.

A correspondence between the target window image and the second check value may be stored in a preset list. The preset list includes a correspondence between at least one check value and a window image, and each window image includes one or more icons.

In this implementation, all window image states included in a window may be obtained by using the preset list. In this way, when it is detected that the first image signal is subjected to interference, a target window image in a normal state is automatically searched for, and a second image signal corresponding to the target window image is sent, so that the display displays the normal window image. In this embodiment, a real image can be restored to the greatest extent and displayed, instead of simply displaying warning information. In this way, even when a signal is subjected to interference in an electromagnetic environment, driving experience of a driver can be ensured.

According to the subject-matter of the independent claim 6, a microprocessor is provides.

With reference to the second aspect, in a possible implementation of the second aspect, the processor is further configured to: parse the first image signal to obtain a first image; and obtain a pixel value of each pixel in the first image, and perform cumulative calculation on all the pixel values in the first image, or perform a cyclic redundancy check CRC on all the pixel values to obtain the first check value.

With reference to the invention, the communication interface is further configured to obtain the second check value sent by the deserializer, where the second check value comes from the SOC of the vehicle host, and in accordance with an embodiment may be generated by the SOC of the vehicle host based on a pixel value of each pixel in the window image corresponding to the first icon.

With reference to the second aspect, in still another possible implementation of the second aspect, the processor is further configured to: determine, by searching, whether a target window image corresponding to the second check value is locally stored, and if the target window image is stored, obtain the target window image, and obtain the second image signal based on the target window image.

With reference to the invention, in still another possible implementation of the second aspect, the communication interface is further configured to: when the processor finds that the target window image is not locally stored, send a third image signal to the display, where the third image signal is used to transmit a window image including an exception prompt icon.

According to the invention, the invention further provides an instrument panel The instrument panel includes a deserializer, the microprocessor, and a display. The microprocessor includes a processor and a memory, and the processor is coupled to the memory. The memory is configured to store computer program instructions. The processor is configured to execute the instructions stored in the memory, so that the microprocessor performs the method in the first aspect and the implementations of the first aspect.

According to the subject-matter of the independent claim 11, which provides a vehicle driving system, including a vehicle host and an instrument panel. The vehicle host and the instrument panel are connected in a wired manner. The vehicle host includes components such as an SOC, a serializer, and a first HSD. The instrument panel includes components such as a second HSD, a deserializer, an MCU, and a display.

The SOC is configured to: calculate a check value corresponding to a to-be-displayed-window image when an operation performed by a user for triggering an event is obtained, where the check value is used as a preset check value, and then send the preset check value to the serializer by using an I2C control link. In addition, the SOC is further configured to: generate a high-speed video signal, and transmit the high-speed video signal to the serializer.

The serializer is configured to: receive the preset check value and the high-speed video signal, and then transmit the preset check value and the high-speed video signal to the instrument panel by using the first HSD.

The second HSD of the instrument panel is configured to: receive the high-speed serial signal and the preset check value that are sent by the first HSD, and transmit the signals to the deserializer.

The deserializer is configured to: receive the high-speed serial signal and the preset check value from the second HSD, convert the high-speed serial signal into a first image signal, and send the first image signal and the preset check value to the MCU by using two different links. Optionally, the preset check value is also referred to as a second check value.

The MCU is configured to: receive the first image signal and the second check value that are sent by the deserializer, perform the method in the first aspect and the implementations of the first aspect, and send any one of the first image signal, a second image signal, and a third image signal to the display.

The display is configured to receive the first image signal, the second image signal, or the third image signal that is sent by the MCU.

When the first image signal is received, it indicates that the high-speed serial signal is not subjected to environmental interference in a transmission process, and a first image corresponding to the first image signal is displayed, where the first image includes a first icon.

When the second image signal is received, it indicates that the high-speed serial signal is subjected to environmental interference in a transmission process, and a target window image corresponding to the second image signal is displayed, where the target window image includes a first icon.

When the third image signal is received, it indicates that the high-speed serial signal is subjected to environmental interference in a transmission process, and no target window image is locally stored on the instrument panel, and an exception prompt icon is displayed.

According to a fifth aspect according to the invention, the invention further provides a computer-readable storage medium. The storage medium stores instructions, so that when the instructions are run on a computer or a processor, the instructions may be used to perform the method in the first aspect and the implementations of the first aspect.

In addition, this invention further provides a computer program product. The computer program product includes computer instructions. When the instructions are executed by a computer or a processor, the method in the first aspect and the implementations of the first aspect can be implemented.

It should be noted that, beneficial effects corresponding to the technical solutions of the implementations of the second aspect to the fifth aspect are the same as the beneficial effects of the first aspect and the implementations of the first aspect. For details, refer to the descriptions of the beneficial effects in the first aspect and the implementations of the first aspect. Details are not described again.

In the following description, features which in the above summary of the invention have been marked as "not claimed" or "according to the invention" are also hereinafter, when they are described and explained with reference to the drawings, to be understood as "not claimed" or "not part of the invention" or "according to the invention" even if sometimes features will be referred to in connection with "may" or "can".

### BRIEF DESCRIPTION OF DRAWINGS

FIG. 1 is a schematic diagram of a structure of a vehicle driving system according to an embodiment of this application;
FIG. 2 is a schematic diagram of a structure of an instrument panel according to an embodiment of this application;
FIG. 3 is a flowchart of a signal sending method according to an embodiment of this application;
FIG. 4 is a schematic diagram of a screen display region in a display according to an embodiment of this application;
FIG. 5 is a schematic diagram of displaying an EBD icon on a display of an instrument panel according to an embodiment of this application;
FIG. 6 is a signaling flowchart of a signal sending method according to an embodiment of this application;
FIG. 7 is a schematic diagram of a structure of a signal sending apparatus according to an embodiment of this application; and
FIG. 8 is a schematic diagram of a structure of an MCU according to an embodiment of this application.

### DESCRIPTION OF EMBODIMENTS

The following describes the technical solutions of this application with reference to embodiments of this application and the accompanying drawings.

For ease of understanding the technical solutions provided in embodiments of this application, a technical scenario to which the technical solutions of this application are applicable is first described.

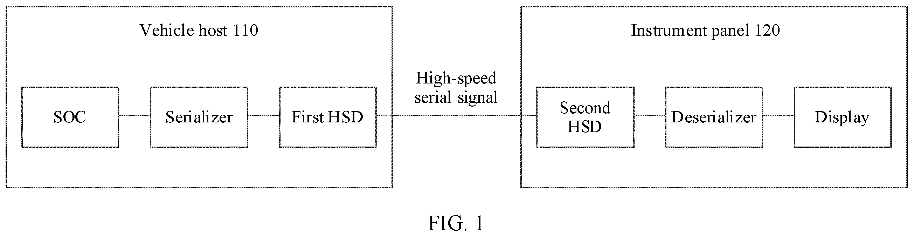

The technical solutions of this application may be applied to a vehicle driving technical scenario, for example, vehicle driving, an autonomous vehicle, an intelligent vehicle, an electric vehicle, or a new energy vehicle. As shown in FIG. 1, a vehicle driving system includes a vehicle host 110 and an instrument panel 120, and the vehicle host 110 and the instrument panel 120 are connected in a wired manner.

The vehicle host 110 may be a cockpit domain controller (Cockpit Domain Controller, CDC). The instrument panel 120 includes, but is not limited to, devices such as an automobile dashboard, a liquid crystal display, an event data recorder, and an electronic rearview mirror.

Specifically, the vehicle host 110 includes components such as a system on chip (system on chip, SOC), a serializer, and a first high speed device (High Speed Device, HSD).

The SOC is configured to obtain an operation performed by a user, for example, a driver for triggering an event. For example, when detecting that the user triggers an icon event of a specific window, the SOC first calculates a check value corresponding to a to-be-displayed-window image. A to-be-displayed window includes an icon that the user expects to display, for example, a first icon. The check value is used as a preset check value, for example, CheckSum 0. Then, the SOC sends the preset check value to the instrument panel 120 by using an I2C (Inter-Integrated Circuit) control link. Specifically, the SOC first sends the preset check value to the serializer of the vehicle host by using the I2C control link. After being received by the serializer, the preset check value is transmitted to the instrument panel 120 by using the first HSD.

The to-be-displayed-window image may include at least one icon. For example, when the to-be-displayed-window image includes the first icon, the first icon may be a left-turn light, a right-turn light, a seat belt, a fuel-level identifier, an electronic brakeforce distribution (Electronic Brakeforce Distribution, EBD) indicator, or the like. Types, functions, and a quantity of icons in each window image are not limited in this embodiment.

In addition, the I2C is a two-wire interface. An I2C bus may be used to connect the SOC and the serializer of the vehicle host 110, or to connect a microcontroller and a peripheral of the instrument panel 120. In this embodiment of this application, the SOC transmits, by using the I2C bus, the preset check value corresponding to the to-be-displayed-window image.

In addition, when detecting that an icon event is to occur, for example, when detecting that the driver is to turn on the right-turn light, or a fuel level of the vehicle is low, or the driver has not properly fastened the seat belt, the SOC further generates a high-speed video signal and transmits the high-speed video signal to the instrument panel 120. In this way, the instrument panel 120 can display the to-be-displayed-window image based on the high-speed serial signal. The to-be-displayed-window image includes a target icon, for example, a right-turn-light icon, a low-fuel-level icon, or a fasten-seat-belt icon. In this embodiment of this application, indicated content and a display manner of an icon are not limited.

In a specific implementation, the SOC first transmits the high-speed video signal to the serializer by using a mobile industry processor interface (Mobile Industry Processor Interface, MIPI). The MIPI is an open standard and specifications that are stipulated for mobile application processors and that are initiated by the MIPI Alliance. In this embodiment of this application, the high-speed video signal transmitted by using the MIPI is also referred to as a "MIPI signal", and a link on which the SOC sends the MIPI signal is also referred to as a data link.

After receiving the MIPI signal from the SOC, the serializer converts the MIPI signal into a high-speed serial signal, and then sends the high-speed serial signal to the first HSD. Optionally, the SOC transmits both the generated MIPI signal and the preset check value to the serializer. After receiving the MIPI signal and the preset check value and converting the MIPI signal, the serializer transmits both the generated high-speed serial signal and the received preset check value to the first HSD.

The first HSD receives the high-speed serial signal and the preset check value, and outputs both signals to an external device, for example, the instrument panel 120.

The instrument panel 120 at a receive end is configured to: receive the high-speed serial signal and the preset check value corresponding to the to-be-displayed-window image that are sent by the vehicle host 110, parse the high-speed serial signal to restore a to-be-displayed-window image generated when the driver triggers an event to occur, for example, a window image including the right-turn-light icon, and display the window image on a display of the instrument panel 120.

On an instrument panel side, the instrument panel 120 includes a second HSD, a deserializer, and the display.

The second HSD is configured to: receive the high-speed serial signal and the preset check value that are sent by the first HSD, and transmit the signals to the deserializer.

The deserializer is configured to: receive the high-speed serial signal and the preset check value from the second HSD, and then parse the high-speed serial signal to generate a low-voltage differential signal (Low-Voltage Differential Signaling, LVDS). The LVDS may be understood as a video signal format. The deserializer further transmits the LVDS to the display. The display may restore the video signal format to a corresponding image, and display the image on a graphical user interface.

However, in a process in which the vehicle host 110 transmits the signals to the instrument panel 120, the high-speed serial signal is subjected to interference in a transmission environment. For example, in an electromagnetic compatibility (Electromagnetic Compatibility, EMC) test, a complex electromagnetic environment that is simulated may cause an error or distortion to an icon that is restored from the high-speed serial signal and that is displayed on the instrument panel 120, seriously affecting driving safety.

In addition, it should be noted that, because the preset check value sent by the vehicle host 110 by using the I2C control link is a low-speed signal and the preset check value is basically not subjected to interference during transmission, embodiments of this application mainly resolve a problem of interference caused to the high-speed serial signal during transmission, and interference caused to low-speed I2C link transmission is negligible.

The following describes the technical solutions of embodiments of this application.

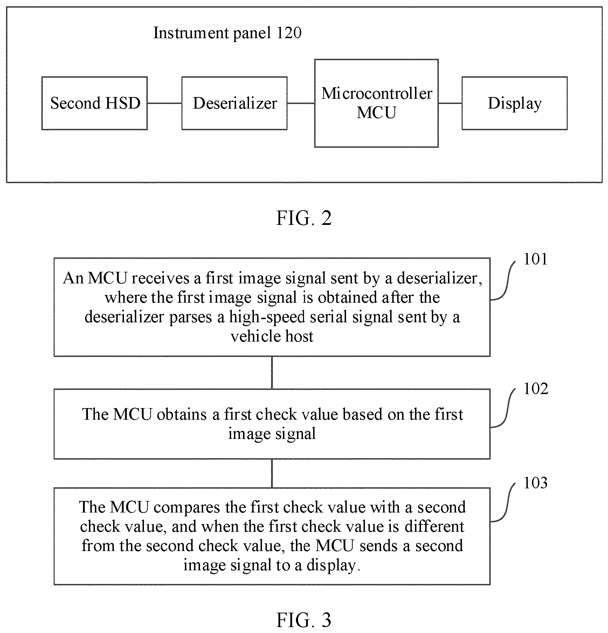

In this embodiment, a processing module, for example, a microprocessor (Micro Controller Unit, MCU) is added to the instrument panel 120. As shown in FIG. 2, one MCU is added between the deserializer and the display, and the MCU may be connected to the deserializer and the display by using a communication interface. The MCU is configured to: detect whether the transmitted high-speed serial signal is subjected to interference, and output a normal image signal to the display when detecting that the transmitted high-speed serial signal is subjected to environmental interference, so that a normal indicative icon is displayed on the display.

Specifically, this embodiment provides a signal sending method. As shown in FIG. 3, the method includes the following steps.

101: The MCU receives a first image signal sent by the deserializer. The first image signal is obtained after the deserializer parses the high-speed serial signal sent by the vehicle host 110. The first image signal is a first LVDS.

Specifically, the deserializer receives a first LVDS transmitted by the second HSD, and then sends the first LVDS to the MCU by using a data link. The MCU receives the first LVDS by using a first interface.

102: The MCU obtains a first check value based on the first image signal.

This process has a plurality of implementations, and may be implemented by using a hardware chip or software code. Optionally, in an implementation using software code, the MCU parses the first image signal to obtain a first image. The first image includes a plurality of pixels, and each pixel may be represented by using one RGB (red, green, blue) value. The RGB value of each pixel may be represented by using one piece of 24-bit (bit) data, corresponding to three bytes (Bytes). For example, for an image with a resolution of 1920*1080, a corresponding data volume is 1920*1080*3 bytes. The RBG value of each pixel may be read by using software, and then a check value (CheckSum) corresponding to each image may be obtained by simple accumulation, or the check value may be obtained by performing a cyclic redundancy check (Cyclic Redundancy Check, CRC).

It should be noted that, a method in which the MCU parses the first image to obtain the first check value is consistent with the foregoing method in which the SOC of the vehicle host calculates check values of all pixels of the to-be-displayed-window image to obtain the preset check value. If the SOC of the vehicle host obtains the preset check value by using the CRC check method, the MCU on the instrument panel side also obtains the first check value by using the CRC check method.

In this embodiment, the MCU parses the first LVDS to obtain the first check value CheckSum 1.

In addition, the method further includes: The MCU receives, by using a second interface, the preset check value sent by the deserializer. Specifically, the deserializer sends two paths of signals to the MCU, where one path is a data link and is used to transmit image data, for example, the first image signal. The other path is an I2C control link, used to transmit a preset check value corresponding to each window image, for example, CheckSum 0. The preset check value is generated and sent by the SOC on a vehicle host 110 side.

Optionally, the preset check value is also referred to as a "second check value".

A sequence in which the MCU obtains the first image signal and the second check value is not limited in this embodiment.

103: The MCU compares the first check value with the second check value, and when the first check value is different from the second check value, the MCU sends a second image signal to the display.

The second image signal is used to transmit a target window image including the first icon.

Specifically, it is detected whether CheckSum 1 and CheckSum 0 are the same. If CheckSum 1 is different from CheckSum 0, that is, the first check value is different from the second check value, it indicates that the transmitted first image signal (corresponding to the high-speed serial signal sent by the vehicle host 110) is subjected to interference, and the second image signal is sent to the display.

Optionally, the second image signal is a second LVDS.

The method further includes 104: The display receives the second image signal sent by the MCU, parses the second image signal to obtain a target window image, and displays the target window image on the display. The target window image includes the first icon.

For example, the display receives the second LVDS sent by the MCU; obtains the corresponding target image after parsing the LVDS, where the target image includes, for example, a right-turn-light icon; and then displays an image of the right-turn-light icon on the display.

According to the method provided in this embodiment, the MCU is added on the instrument panel side, and is configured to: detect whether the high-speed serial signal sent from the vehicle host side is subjected to environmental interference, and when detecting that the high-speed serial signal is subjected to environmental interference, send a normal image signal to the display, so that a normal icon is displayed on the display, to avoid displaying an image of a wrong icon on the instrument panel. This method improves accuracy of icon display on the instrument panel side, and ensures driving safety of a driver.

It should be noted that, because the second check value CheckSum 0 is a check value obtained by the MCU by using the I2C control link, and a low-speed signal transmitted by the I2C control link is basically not affected by an environment, the second check value is compared with the first check value, so that it can be accurately determined whether the high-speed serial signal sent from the vehicle host side is subjected to interference in the transmission process.

In addition, the method further includes 105: Send the first image signal when it is detected that the first check value is the same as the second check value.

In this case, the high-speed serial signal received by the instrument panel is not subjected to interference in the transmission process. Therefore, the MCU sends the first LVDS to the display, so that the display displays a normal window icon based on the first LVDS.

In this embodiment, before the MCU sends the second image signal in step 103, the method further includes: obtaining the second image signal. Specifically, the obtaining the second image signal includes the following:
103-1: The MCU determines, by searching, whether a target window image corresponding to the second check value is locally stored.

Specifically, the MCU searches a local preset list for the target window image. The preset list includes a correspondence between at least one check value and a window image, and each window image includes one or more icons.

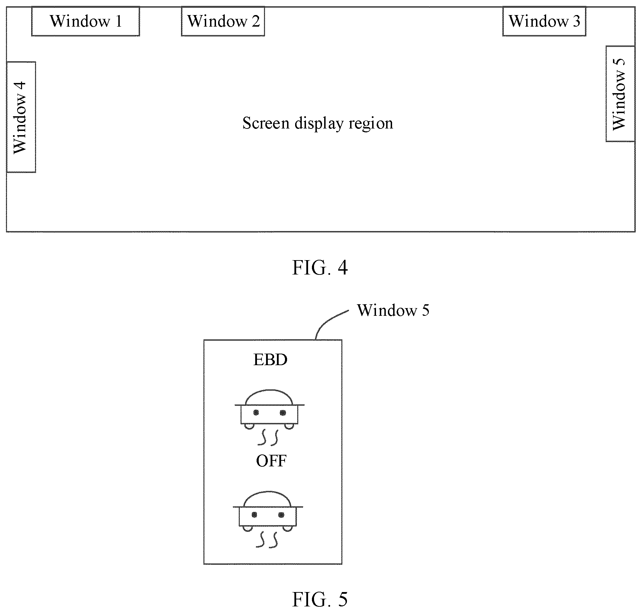

FIG. 4 is a schematic diagram of windows divided in a screen display region of a display. The screen display region is divided into five windows, namely, a window 1 to a window 5. An icon in each window is an icon that needs to be detected and protected. In addition, any icon in the window 1 to the window 5 may be the first icon in the foregoing embodiment.

For example, FIG. 5 is a schematic diagram of displaying an EBD icon on a display. For a vehicle equipped with an EBD system, a status of adhesion between each wheel and a ground is automatically detected, and a force generated by a braking system is appropriately distributed to the four wheels, so that the vehicle keeps steady while braking, thereby improving driving safety. Corresponding to the window 5 shown in FIG. 4, the window 5 includes two icons, and each icon includes two states: "on" and "off". When the first icon is on, it indicates that an EBD system function is disabled. When the second icon is on, it indicates that an electronic balance system is abnormal. In this case, the driver is reminded to drive cautiously at a low speed and go to a repair shop for maintenance in time.

In addition, the screen display region of the display may further include another window, or each window may include more other icons. This is not limited in this embodiment.

103-2: If the target window image corresponding to the second check value is locally stored, obtain the target window image, and obtain the second image signal based on the target window image.

Specifically, after obtaining the target window image, the MCU converts the target window image into an LVDS, that is, the second LVDS.

103-3: If the MCU finds that the target window image is not locally stored, the MCU sends a third image signal to the display, where the third image signal is used to transmit a window image including an exception prompt icon.

For example, as shown in Table 1, the "window 5" shown in FIG. 5 is used as an example for description. The "window 5" includes two icons: an icon 1 and an icon 2. Each icon corresponds to two states: one is an icon "on" state, and the other is an icon "off" state. In addition, each combination of window icon states corresponds to one check value. As shown in Table 1, when both the icon 1 and the icon 2 are in the "on" state, a corresponding check value is CheckSum 1. Similarly, when the icon 1 is in the "on" state and the icon 2 is in the "off" state, a corresponding check value is CheckSum 2. When the icon 1 is in the "off" state and the icon 2 is in the "on" state, a corresponding check value is CheckSum 3. When both the icon 1 and the icon 2 are in the "off" state, a corresponding check value is CheckSum 4.

**Table 1. Preset list**

| Window image state | | Check value CheckSum |
|---|---|---|
| Icon 1 | Icon 2 | |
| On | On | CheckSum 1 |
| On | Off | CheckSum 2 |
| Off | On | CheckSum 3 |
| Off | Off | CheckSum 4 |

In this embodiment, it is detected, in the preset list shown in Table 1, whether there is one CheckSum same as the first check value CheckSum 0 obtained in the foregoing step 102. After comparison, the check values CheckSum 1 to CheckSum 4 are all different from CheckSum 0. Therefore, no matching target window image exists. Step 103-3 is performed to send the third image signal, for example, a third LVDS. After receiving the third LVDS, the display parses the third LVDS to obtain a third image. The third image includes an exception prompt icon, used to send a display exception warning to the driver.

Optionally, if the first check value obtained in step 102 is CheckSum 1, a target window image matching the first check value CheckSum 1 exists in the preset list. If the target window image includes the icon 1 and the icon 2, and both icons are in the "on" state, step 103-2 is performed.

That the display receives the image signal sent by the MCU specifically includes the following cases: (1) If the second LVDS is received, the target window image, that is, an image in which both the icon 1 and the icon 2 are on, is displayed. (2) If the third LVDS is received, an exception prompt icon is displayed.

In this embodiment, all window image states included in a window may be obtained by using the preset list. In this way, when it is detected that the first image signal is subjected to interference, a target window image in a normal state is automatically searched for, and a second image signal corresponding to the target window image is sent, so that the display displays the normal window image. In this embodiment, a real image can be restored to the greatest extent and displayed, instead of simply displaying warning information. In this way, even when a signal is subjected to interference in an electromagnetic environment, driving experience of a driver can be ensured.

It should be noted that, the target window image may alternatively be obtained in another manner. This is not limited in this embodiment.

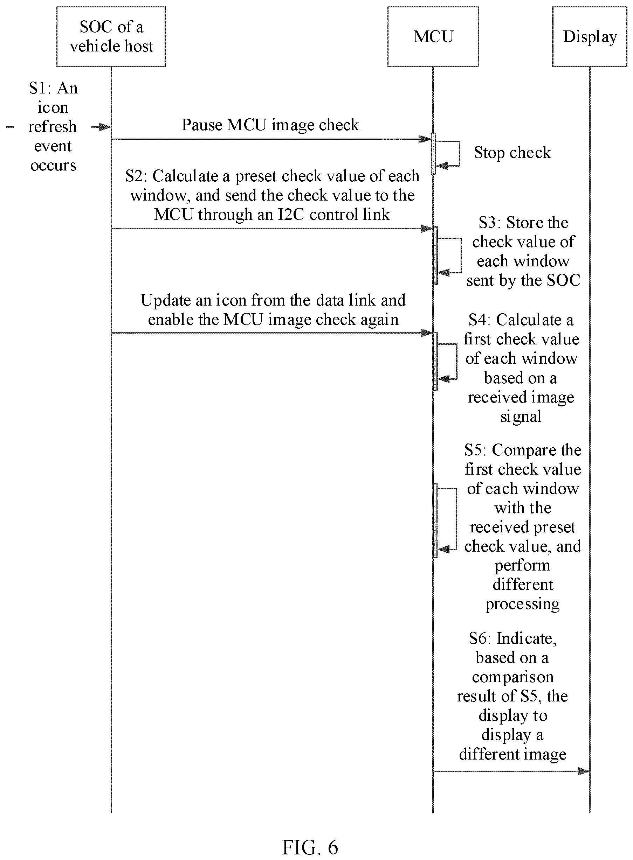

In a specific embodiment, as shown in FIG. 6, the method includes: First, a preset list of each window is stored in the MCU on an instrument panel 120 side. The preset list includes a correspondence between a window image and a check value, and each window image includes at least one icon. When the SOC on the vehicle host 110 side needs to refresh an icon, the following processing procedure is performed.

S1: When detecting that an icon refresh event occurs, the SOC of the vehicle host indicates the MCU to pause an image check process of the MCU. The icon refresh event may be understood as that the driver operates the vehicle, for example, turns left or right, and a new indication icon is generated. Alternatively, the icon refresh event may be that an indicative icon, for example, an indicative icon indicating to fasten a seat belt or indicating a low fuel level, a fault, or an EBD, is generated when the vehicle host detects a particular situation of the vehicle and the driver needs to be prompted.

A time interval for indicating the MCU to pause the image check is very short, for example, 1 or 2 seconds, so as to prevent a synchronization error on the MCU.

S2: The SOC calculates, based on the divided window regions, for example, the five windows shown in FIG. 4, a check value corresponding to each display window, that is, the preset check value (or referred to as the second check value). The five windows correspond to five preset check values. Each preset check value may be obtained by accumulating pixel values of all icons in a current window image, or by performing a CRC on all the pixel values. After the preset value of each window image is calculated, the preset check values of the five windows are sent to the MCU on the instrument panel side by using the I2C control link. At the same time, an updated icon is sent to the MCU by using an image signal (for example, the LVDS) through the data link.

S3: The MCU receives the preset check value, of each window, that is sent by the SOC of the vehicle host, and stores the preset check value of each window.

S4: After receiving the image signal sent by the SOC of the vehicle host, the MCU checks the image signal based on a method the same as that of the SOC of the vehicle host, to obtain the check value corresponding to each window image.

S5: The MCU determines, by comparison, whether the check value of each window image is the same as the preset check value received by using the I2C control link, and performs corresponding processing based on a comparison result.

S6: If the MCU determines that a currently calculated check value is the same as its corresponding preset check value, the MCU indicates the display to directly display the window image sent by the host SOC. If the currently calculated check value is different from its corresponding preset check value, it indicates that the high-speed serial signal is subjected to interference during transmission. In this case, the preset list is searched based on the preset check value to determine whether a matching target window image exists. If a matching target window image exists, the target window image is obtained; or if no matching target window image exists, the display is indicated to display an exception prompt icon.

For a specific process, refer to steps 101 to 104 in the foregoing embodiment. Details are not described herein again in this embodiment.

In this embodiment, when transmitting the image signal, the vehicle host side also sends the check value corresponding to the image signal to the instrument panel side by using the low-speed bus (for example, I2C). The MCU is added to the instrument panel side to compare the check value obtained by parsing the image signal, thereby meeting a functional safety requirement of the vehicle-mounted display. In this embodiment of this application, a redundant low-speed path is added, so that a display exception caused by high-speed signal interference is avoided, a driver's misjudgment is avoided, and driving safety is improved.

When sensing that the high-speed serial signal is subjected to interference, the MCU side restores a real icon to the greatest extent by comparing the first check value obtained by parsing with the preset check value of the image, rather than simply displaying warning information. In this way, even when a signal is subjected to interference in an electromagnetic environment, driving experience of a driver can be ensured.

The following describes apparatus embodiments corresponding to the foregoing method embodiment.

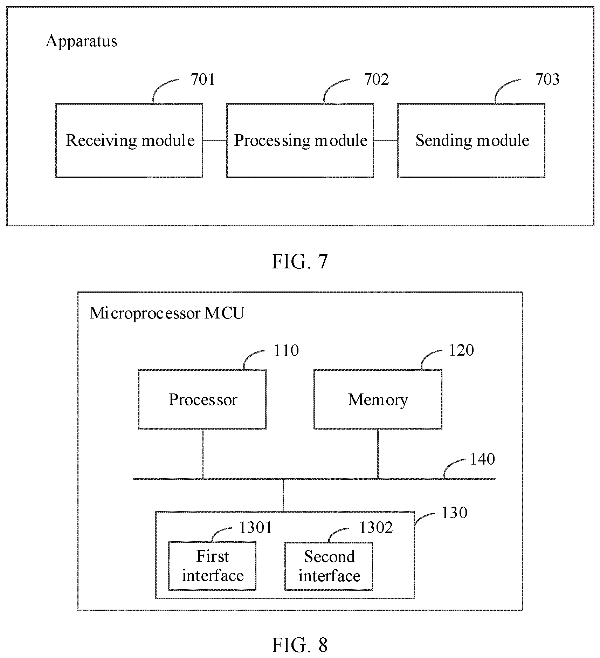

FIG. 7 is a schematic diagram of a structure of a signal sending apparatus according to an embodiment of this application. The apparatus may be an electronic device, or a component located in the electronic device, for example, an MCU. In addition, the apparatus can implement the signal sending method in the foregoing embodiment.

Specifically, as shown in FIG. 7, the apparatus may include a receiving module 701, a processing module 702, and a sending module 703. In addition, the apparatus may further include another unit or module such as a storage unit.

The receiving module 701 is configured to receive the first image signal sent by the deserializer, where the first image signal is obtained after the deserializer parses the high-speed serial signal sent by the vehicle host. The processing module 702 is configured to obtain a first check value based on the first image signal. The sending module 703 is configured to send a second image signal to the display when the processing module 702 detects that the first check value is different from a second check value corresponding to the first icon, where the second image signal is used to transmit a target window image including the first icon.

Optionally, in a specific implementation of this embodiment, the processing module 702 is further configured to: parse the first image signal to obtain a first image; and obtain a pixel value of each pixel in the first image, and perform cumulative calculation on all the pixel values in the first image, or perform a CRC on all the pixel values to obtain the first check value.

Optionally, in another specific implementation of this embodiment, the receiving module 701 is further configured to obtain the second check value sent by the deserializer, where the second check value comes from the SOC of the vehicle host, and is generated by the SOC of the vehicle host based on a pixel value of each pixel in a window image corresponding to the first icon.

Optionally, in still another specific implementation of this embodiment, the processing module 702 is further configured to: before sending the second image signal to the display by using the sending module 703, obtain the second image signal. Further, the processing module 702 is specifically configured to: determine, by searching, whether the target window image corresponding to the second check value is locally stored; and if the target window image corresponding to the second check value is locally stored, obtain the target window image, and obtain the second image signal based on the target window image.

Optionally, in still another specific implementation of this embodiment, the processing module 702 is further configured to: if it is found that the target window image is not locally stored, send a third image signal to the display by using the sending module 703, where the third image signal is used to transmit a window image including an exception prompt icon.

In addition, in specific hardware implementation, an embodiment of this application further provides an MCU. The MCU may be an independent component, or may be a component integrated with an instrument panel.

FIG. 8 is a schematic diagram of a structure of an MCU. The MCU may include a processor 110, a memory 120, and at least one communication interface 130. The processor 110, the memory 120, and the at least one communication interface 130 are coupled by using a communication bus 140.

The processor 110 is a control center of the MCU, and may be configured to perform communication between devices, including calculation of a first image signal, a second image signal, a first check value, a second check value, and the like.

The processor 110 may include an integrated circuit (Integrated Circuit, IC), for example, may include a single packaged IC, or may include a plurality of connected packaged ICs with a same function or different functions. For example, the processor 110 may include a central processing unit (Central Processing Unit, CPU), a digital signal processor (Digital Signal Processor, DSP), or the like.

In addition, the processor 110 may further include a hardware chip. The hardware chip may be an application-specific integrated circuit (application specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof. Optionally, the hardware chip is a processing chip.

The memory 120 is configured to store and exchange various types of data or software, including storing the first image signal, the second image signal, the first check value, the second check value, and the like. In addition, the memory 120 may store a computer program or code.

Specifically, the memory 120 may include a volatile memory (volatile Memory), for example, a random access memory (Random Access Memory, RAM). The memory 120 may further include a non-volatile memory (non-volatile memory), for example, a flash memory (flash memory), a hard disk drive (Hard Disk Drive, HDD), or a solid-state drive (Solid-State Drive, SSD). The memory 120 may further include a combination of the foregoing types of memories.

The communication interface 130 uses any type of apparatus such as a transceiver, and is configured to communicate with another device or a communication network, for example, an Ethernet, a radio access network (radio access network, RAN), a WLAN, or a VXLAN. In this embodiment, the communication interface 130 includes a first interface 1301 and a second interface 1302. The first interface 1301 is configured to transmit a data signal, for example, receive a first image signal sent by a deserializer. The second interface 1302 is configured to receive a signal of an I2C link, for example, receive a preset check value sent from a vehicle host side.

In addition, a third interface may be further included. The third interface is configured to send the second image signal, the third image signal, or the like to a display. The third interface is not shown in FIG. 8.

It should be understood that, the MCU may further include more or fewer other components. A structure illustrated in this embodiment of this application does not constitute a specific limitation on the MCU. In addition, the components shown in FIG. 8 may be implemented in a manner of hardware, software, firmware, or any combination thereof.

When software is used to implement the embodiments, all or a part of the embodiments may be implemented in a form of a computer program product. For example, the receiving module 701 and the sending module 703 in the apparatus shown in FIG. 7 may be implemented by using the communication interface 130. A function of the processing module 702 may be implemented by the processor 110. A function of the storage unit may be implemented by the memory 120.

Specifically, the MCU receives, by using the communication interface 130, the first image signal sent by the deserializer, where the first image signal is obtained after the deserializer parses the high-speed serial signal sent by the vehicle host. The processor 110 of the MCU obtains a first check value based on the first image signal; and when detecting that the first check value is different from a second check value corresponding to the first icon, the processor 110 of the MCU sends a second image signal to the display by using the communication interface 130, where the second image signal is used to transmit a target window image including the first icon.

In addition, the MCU further includes a mobile communication module, a wireless communication module, and the like. The mobile communication module includes a module that has a wireless communication function such as 2G/3G/4G/5G. In addition, a filter, a switch, a power amplifier, a low noise amplifier (low noise amplifier, LNA), and the like may be further included. The wireless communication module may provide a wireless communication solution that is applied to a network device and that includes a wireless local area network (Wireless Local Area Network, WLAN), Bluetooth (Bluetooth), a global navigation satellite system (global navigation satellite system, GNSS), and frequency modulation (frequency modulation, FM).

In addition, an embodiment of this application further provides a vehicle driving system. The system includes a vehicle host and an instrument panel. The instrument panel includes the MCU shown in FIG. 8, configured to implement the signal sending method in the foregoing embodiment.

A structure of the vehicle host may be the same as or different from a structure of the MCU shown in FIG. 8. A structure and a specific form of the vehicle host are not limited in this embodiment.

In the system provided in this embodiment, the MCU is added on an instrument panel side, and the MCU may receive a preset check value sent on one I2C link. Although a high-speed serial signal is easily subjected to environmental interference, the preset check value transmitted by the low-speed I2C link is basically not subjected to interference. Therefore, when the high-speed serial signal is subjected to interference, according to the signal sending method of this application, a correct icon is still displayed on a liquid crystal display of the instrument panel, to avoid misjudgment of a driver, thereby ensuring driving safety.

An embodiment of this application further provides a computer program product. The computer program product includes one or more computer program instructions. When the computer program instructions are loaded and executed on a computer, the procedure or functions according to embodiments are all or partially generated. The computer may be a general-purpose computer, a dedicated computer, a computer network, or other programmable apparatuses.

The computer program instructions may be stored in a computer-readable storage medium, or may be transmitted from one computer-readable storage medium to another computer-readable storage medium. For example, the computer instructions may be transmitted from one communication device, computer, server, or data center to another communication device in a wired or wireless manner.

The computer program product and the computer program instructions may be located in the memory 120 of the communication device above, to implement the signal sending method in embodiments of this application.

In addition, in the description of embodiments of this application, "at least one" means one or more. In addition, to clearly describe the technical solutions in embodiments of this application, words such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference.

The foregoing embodiments of this application are not intended to limit the protection scope of this application.

## Claims

1. A signal sending method, wherein
when a user triggers an event of a first icon, a system on chip SOC of a vehicle host (110) generates a high-speed serial signal and sends the high-speed serial signal, via a mobile industry processor interface, MIPI, as a MIPI signal on a data link to an instrument panel (120), the high-speed serial signal is used to transmit a window image corresponding to the first icon, and the instrument panel (120) comprises a deserializer, a microprocessor MCU, and a display, and the method comprises:
receiving, by the MCU, a first image signal sent by the deserializer, wherein the first image signal is obtained after the deserializer parses the high-speed serial signal sent by the vehicle host (110);
obtaining, by the MCU, a first check value based on the first image signal;
obtaining, by the MCU, a second check value sent by the deserializer, wherein the second check value is corresponding to the first icon and is sent from the SOC of the vehicle host (110) to the instrument panel (120) by using an Inter-Integrated Circuit, 12C, data link, and
when detecting that the first check value is different from the second check value, sending, by the MCU, a second image signal to the display, wherein the second image signal is used to transmit a target window image comprising the first icon.

2. The method according to claim 1, wherein the obtaining, by the MCU, a first check value based on the first image signal comprises:
parsing, by the MCU, the first image signal to obtain a first image; and
obtaining, by the MCU, a pixel value of each pixel in the first image, and performing cumulative calculation on all the pixel values in the first image, or performing a cyclic redundancy check CRC check on all the pixel values, to obtain the first check value.

3. The method according to claim 1 or 2, wherein the second check value is generated by the SOC of the vehicle host (110) based on a pixel value of each pixel in a window image corresponding to the first icon.

4. The method according to any one of claims 1 to 3, wherein before the sending a second image signal to the display, the method further comprises: obtaining the second image signal; and
the obtaining the second image signal comprises:
determining by searching, by the MCU, whether a target window image corresponding to the second check value is locally stored; and
if the target window image corresponding to the second check value is locally stored, obtaining the target window image, and obtaining the second image signal based on the target window image.

5. The method according to claim 4, further comprising:
if determining by searching that the target window image is not locally stored, sending, by the MCU, a third image signal to the display, wherein the third image signal is used to transmit a window image comprising an exception prompt icon.

6. A microprocessor, wherein when a user triggers an event of a first icon, a system on chip SOC of a vehicle host (110) generates a high-speed serial signal and sends the high-speed serial signal, via a mobile industry processor interface, MIPI, as a MIPI signal on a data link to an instrument panel (120), the high-speed serial signal is used to transmit a window image corresponding to the first icon, and the instrument panel (120) comprises a deserializer, the microprocessor, and a display, and the microprocessor comprises:
a communication interface (130), configured to receive, a first image signal sent by the deserializer, wherein the first image signal is obtained after the deserializer parses the high-speed serial signal sent by the vehicle host (110); and
a processor (110), configured to: obtain a first check value based on the first image signal received by the communication interface (130), and obtain a second check value sent by the deserializer, wherein the second check value is corresponding to the first icon and is sent from the SOC of the vehicle host (110) to the instrument panel (120) by using an Inter-Integrated Circuit, 12C, data link,
and detect whether the first check value is the same as the second check value; and
the communication interface (130) is further configured to: when a processor (110) detects that the first check value is different from the second check value, send a second image signal to the display, wherein the second image signal is used to transmit a target window image comprising the first icon.

7. The microprocessor according to claim 6, wherein
the processor (110) is further configured to: parse the first image signal to obtain a first image; and obtain a pixel value of each pixel in the first image, and perform cumulative calculation on all the pixel values in the first image, or perform a cyclic redundancy check CRC on all the pixel values, to obtain the first check value.

8. The microprocessor according to claim 6 or 7,
wherein the second check value is generated by the SOC of the vehicle host (110) based on a pixel value of each pixel in a window image corresponding to the first icon.

9. The microprocessor according to any one of claims 6 to 8, wherein
the processor (110) is further configured to: determine, by searching, whether a target window image corresponding to the second check value is locally stored; and if the target window image is stored, obtain the target window image, and obtain the second image signal based on the target window image.

10. The microprocessor according to claim 9, wherein
the communication interface (130) is further configured to: when the processor determines by searching that the target window image is not locally stored, send a third image signal to the display, wherein the third image signal is used to transmit a window image comprising an exception prompt icon.

11. An instrument panel (120), comprising a deserializer, a microprocessor, and a display, wherein the microprocessor comprises a processor (110) and a memory (120), and the processor (110) is coupled to the memory (120);
the memory (120) is configured to store computer program instructions; and
the processor (110) is configured to execute the instructions stored in the memory (120), so that the microprocessor performs the method according to any one of claims 1 to 5.

12. A computer-readable storage medium, comprising instructions, wherein when the instructions are run on a computer, the computer performs the method according to any one of claims 1 to 5.

13. A computer program product, wherein when the computer program product is run on a computer, the computer is enabled to perform the method according to any one of claims 1 to 5.

## Patentansprüche

1. Signalsendeverfahren, wobei,
wenn ein Benutzer ein Ereignis eines ersten Symbols auslöst, ein System auf einem Chip, SOC, eines Fahrzeughosts (110) ein serielles Hochgeschwindigkeitssignal erzeugt und das serielle Hochgeschwindigkeitssignal über eine mobile Industrieprozessorschnittstelle, MIPI, als MIPI-Signal auf einer Datenverbindung an ein Armaturenbrett (120) sendet, das serielle Hochgeschwindigkeitssignal verwendet wird, um ein Fensterbild zu übertragen, das dem ersten Symbol entspricht, und das Armaturenbrett (120) einen Deserialisierer, einen Mikroprozessor, MCU, und eine Anzeige umfasst und das Verfahren Folgendes umfasst:
Empfangen, durch den MCU, eines ersten Bildsignals, das durch den Deserialisierer gesendet wird, wobei das erste Bildsignal erlangt wird, nachdem der Deserialisierer das serielle Hochgeschwindigkeitssignal geparst hat, das durch den Fahrzeughost (110) gesendet wird;
Erlangen, durch den MCU, eines ersten Prüfwerts basierend auf dem ersten Bildsignal;
Erlangen, durch den MCU, eines zweiten Prüfwerts, der durch den Deserialisierer gesendet wird, wobei der zweite Prüfwert dem ersten Symbol entspricht und durch den SOC des Fahrzeughosts (110) unter Verwendung einer Inter-Integrated Circuit-, I2C-, Datenverbindung an das Armaturenbrett (120) gesendet wird, und, wenn erkannt wird, dass sich der erste Prüfwert von dem zweiten Prüfwert unterscheidet, Senden, durch den MCU, eines zweiten Bildsignals an die Anzeige, wobei das zweite Bildsignal verwendet wird, um ein Zielfensterbild zu übertragen, welches das erste Symbol umfasst.

2. Verfahren nach Anspruch 1, wobei das Erlangen, durch den MCU, eines ersten Prüfwerts basierend auf dem ersten Bildsignal Folgendes umfasst:
Parsen, durch den MCU, des ersten Bildsignals, um ein erstes Bild zu erlangen; und
Erlangen, durch den MCU, eines Pixelwerts jedes Pixels in dem ersten Bild und Durchführen einer kumulativen Berechnung sämtlicher Pixelwerte in dem ersten Bild oder Durchführen einer zyklischen Redundanzprüfung, CRC-Prüfung, sämtlicher Pixelwerte, um den ersten Prüfwert zu erlangen.

3. Verfahren nach Anspruch 1 oder 2, wobei der zweite Prüfwert durch das SOC des Fahrzeughosts (110) basierend auf einem Pixelwert jedes Pixels in einem Fensterbild erzeugt wird, das dem ersten Symbol entspricht.

4. Verfahren nach einem der Ansprüche 1 bis 3, wobei das Verfahren vor dem Senden eines zweiten Bildsignals an die Anzeige ferner Folgendes umfasst: Erlangen des zweiten Bildsignals; und
das Erlangen des zweiten Bildsignals Folgendes umfasst:
Ermitteln durch Suchen, durch den MCU, ob ein Zielfensterbild, das dem zweiten Prüfwert entspricht, lokal gespeichert ist; und,
wenn das Zielfensterbild, das dem zweiten Prüfwert entspricht, lokal gespeichert ist, Erlangen des Zielfensterbilds und Erlangen des zweiten Bildsignals basierend auf dem Zielfensterbild.

5. Verfahren nach Anspruch 4, ferner umfassend:
wenn durch Suchen ermittelt wird, dass das Zielfensterbild nicht lokal gespeichert ist, Senden, durch den MCU, eines dritten Bildsignals an die Anzeige, wobei das dritte Bildsignal verwendet wird, um ein Fensterbild zu übertragen, das ein Ausnahmeaufforderungssymbol umfasst.

6. Mikroprozessor, wobei, wenn ein Benutzer ein Ereignis eines ersten Symbols auslöst, ein System auf einem Chip, SOC, eines Fahrzeughosts (110) ein serielles Hochgeschwindigkeitssignal erzeugt und das serielle Hochgeschwindigkeitssignal über eine mobile Industrieprozessorschnittstelle, MIPI, als MIPI-Signal auf einer Datenverbindung an ein Armaturenbrett (120) sendet, das serielle Hochgeschwindigkeitssignal verwendet wird, um ein Fensterbild zu übertragen, das dem ersten Symbol entspricht, und das Armaturenbrett (120) einen Deserialisierer, einen Mikroprozessor und eine Anzeige umfasst und der Mikroprozessor Folgendes umfasst:
eine Kommunikationsschnittstelle (130), die dazu konfiguriert ist, ein erstes Bildsignal zu empfangen, das durch den Deserialisierer gesendet wird, wobei das erste Bildsignal erlangt wird, nachdem der Deserialisierer das serielle Hochgeschwindigkeitssignal geparst hat, das durch den Fahrzeughost (110) gesendet wird; und
einen Prozessor (110), der zu Folgendem konfiguriert ist:
Erlangen eines ersten Prüfwerts basierend auf dem ersten Bildsignal, das durch die Kommunikationsschnittstelle (130) empfangen wird, und Erlangen eines zweiten Prüfwerts, der durch den Deserialisierer gesendet wird, wobei der zweite Prüfwert dem ersten Symbol entspricht und durch das SOC des Fahrzeughosts (110) unter Verwendung einer Inter-Integrated Circuit-, I2C-, Datenverbindung an das Armaturenbrett (120) gesendet wird,
und Erkennen, ob der erste Prüfwert derselbe wie der zweite Prüfwert ist; und
die Kommunikationsschnittstelle (130) ferner zu Folgendem konfiguriert ist: wenn ein Prozessor (110) erkennt, dass sich der erste Prüfwert von dem zweiten Prüfwert unterscheidet, Senden eines zweiten Bildsignals an die Anzeige, wobei das zweite Bildsignal verwendet wird, um ein Zielfensterbild zu übertragen, welches das erste Symbol umfasst.

7. Mikroprozessor nach Anspruch 6, wobei
der Prozessor (110) ferner zu Folgendem konfiguriert ist: Parsen des ersten Bildsignals, um ein erstes Bild zu erlangen; und Erlangen eines Pixelwerts jedes Pixels in dem ersten Bild und Durchführen einer kumulativen Berechnung sämtlicher Pixelwerte in dem ersten Bild oder Durchführen einer zyklischen Redundanzprüfung, CRC, sämtlicher Pixelwerte, um den ersten Prüfwert zu erlangen.

8. Mikroprozessor nach Anspruch 6 oder 7,
wobei der zweite Prüfwert durch das SOC des Fahrzeughosts (110) basierend auf einem Pixelwert jedes Pixels in einem Fensterbild erzeugt wird, das dem ersten Symbol entspricht.

9. Mikroprozessor nach einem der Ansprüche 6 bis 8, wobei
der Prozessor (110) ferner zu Folgendem konfiguriert ist: Ermitteln durch Suchen, ob ein Zielfensterbild, das dem zweiten Prüfwert entspricht, lokal gespeichert ist; und, wenn das Zielfensterbild gespeichert ist, Erlangen des Zielfensterbilds und Erlangen des zweiten Bildsignals basierend auf dem Zielfensterbild.

10. Mikroprozessor nach Anspruch 9, wobei
die Kommunikationsschnittstelle (130) ferner zu Folgendem konfiguriert ist: wenn der Prozessor durch Suchen ermittelt, dass das Zielfensterbild nicht lokal gespeichert ist, Senden eines dritten Bildsignals an die Anzeige, wobei das dritte Bildsignal verwendet wird, um ein Fensterbild zu übertragen, das ein Ausnahmeaufforderungssymbol umfasst.

11. Armaturenbrett (120), umfassend einen Deserialisierer, einen Mikroprozessor und eine Anzeige, wobei der Mikroprozessor einen Prozessor (110) und einen Speicher (120) umfasst und der Prozessor (110) mit dem Speicher (120) gekoppelt ist;
der Speicher (120) dazu konfiguriert ist, Computerprogrammanweisungen zu speichern; und
der Prozessor (110) dazu konfiguriert ist, die Anweisungen auszuführen, die in dem Speicher (120) gespeichert sind, so dass der Mikroprozessor das Verfahren nach einem der Ansprüche 1 bis 5 durchführt.

12. Computerlesbares Speichermedium, umfassend Anweisungen, wobei, wenn die Anweisungen auf einem Computer ausgeführt werden, der Computer das Verfahren nach einem der Ansprüche 1 bis 5 durchführt.

13. Computerprogrammprodukt, wobei, wenn das Computerprogrammprodukt auf einem Computer ausgeführt wird, der Computer in die Lage versetzt wird, das Verfahren nach einem der Ansprüche 1 bis 5 durchzuführen.

## Revendications

1. Procédé d'émission de signaux, dans lequel
lorsqu'un utilisateur déclenche un événement d'une première icône, un système sur puce, SOC, d'un hôte de véhicule (110) génère un signal série à grande vitesse et envoie le signal série à grande vitesse, via une interface de processeur industriel mobile, MIPI, en tant que signal MIPI sur une liaison de données à un tableau de bord (120), le signal série à grande vitesse est utilisé pour transmettre une image de fenêtre correspondant à la première icône, et le tableau de bord (120) comprend un désérialiseur, un microprocesseur MCU et un affichage, et le procédé comprend :
la réception, par le MCU, d'un premier signal d'image envoyé par le désérialiseur, dans lequel le premier signal d'image est obtenu après que le désérialiseur a analysé le signal série à grande vitesse envoyé par l'hôte du véhicule (110) ;
l'obtention, par le MCU, d'une première valeur de vérification sur la base du premier signal d'image ;
l'obtention, par le MCU, d'une seconde valeur de vérification envoyée par le désérialiseur, dans lequel la seconde valeur de vérification correspond à la première icône et est envoyée du SOC de l'hôte du véhicule (110) au tableau de bord (120) à l'aide d'une liaison de données d'un circuit inter-intégré, I2C, et
lors de la détection que la première valeur de vérification est différente de la seconde valeur de vérification, l'envoi, par le MCU, d'un deuxième signal d'image à l'affichage, dans lequel le deuxième signal d'image est utilisé pour transmettre une image de fenêtre cible comprenant la première icône.

2. Procédé selon la revendication 1, dans lequel l'obtention, par le MCU, d'une première valeur de vérification sur la base du premier signal d'image comprend :
l'analyse, par le MCU, du premier signal d'image pour obtenir une première image ; et
l'obtention, par le MCU, d'une valeur de pixel de chaque pixel dans la première image, et la réalisation d'un calcul cumulatif sur toutes les valeurs de pixel dans la première image, ou la réalisation d'un contrôle de redondance cyclique CRC sur toutes les valeurs de pixel, pour obtenir la première valeur de vérification.

3. Procédé selon la revendication 1 ou 2, dans lequel la seconde valeur de vérification est générée par le SOC de l'hôte du véhicule (110) sur la base d'une valeur de pixel de chaque pixel dans une image de fenêtre correspondant à la première icône.

4. Procédé selon l'une quelconque des revendications 1 à 3, dans lequel, avant l'envoi d'un deuxième signal d'image à l'affichage, le procédé comprend également : l'obtention du deuxième signal d'image ; et
l'obtention du deuxième signal d'image comprend :
le fait de déterminer par recherche, par le MCU, si une image de fenêtre cible correspondant à la seconde valeur de vérification est stockée localement ; et
si l'image de la fenêtre cible correspondant à la seconde valeur de vérification est stockée localement, l'obtention de l'image de la fenêtre cible et l'obtention du deuxième signal d'image sur la base de l'image de la fenêtre cible.

5. Procédé selon la revendication 4, comprenant également :
si le fait de déterminer par recherche que l'image de fenêtre cible n'est pas stockée localement, l'envoi, par le MCU, d'un troisième signal d'image à l'affichage, dans lequel le troisième signal d'image est utilisé pour transmettre une image de fenêtre comprenant une icône d'invite d'exception.

6. Microprocesseur, dans lequel lorsqu'un utilisateur déclenche un événement d'une première icône, un système sur puce, SOC, d'un hôte de véhicule (110) génère un signal série à grande vitesse et envoie le signal série à grande vitesse, via une interface de processeur industriel mobile, MIPI, en tant que signal MIPI sur une liaison de données à un tableau de bord (120), le signal série à grande vitesse est utilisé pour transmettre une image de fenêtre correspondant à la première icône, et le tableau de bord (120) comprend un désérialiseur, le microprocesseur et un affichage, et le microprocesseur comprend :
une interface de communication (130), configurée pour recevoir un premier signal d'image envoyé par le désérialiseur, dans lequel le premier signal d'image est obtenu après que le désérialiseur a analysé le signal série à grande vitesse envoyé par l'hôte du véhicule (110) ; et
un processeur (110), configuré pour : obtenir une première valeur de vérification sur la base du premier signal d'image reçu par l'interface de communication (130), et obtenir une seconde valeur de vérification envoyée par le désérialiseur, dans lequel la seconde valeur de vérification correspond à la première icône et est envoyée depuis le SOC de l'hôte du véhicule (110) au tableau de bord (120) à l'aide d'une liaison de données d'un circuit inter-intégré, I2C,
et détecter si la première valeur de vérification est la même que la seconde valeur de vérification ; et
l'interface de communication (130) est également configurée pour : lorsqu'un processeur (110) détecte que la première valeur de vérification est différente de la seconde valeur de vérification, envoyer un deuxième signal d'image à l'affichage, dans lequel le deuxième signal d'image est utilisé pour transmettre une image de fenêtre cible comprenant la première icône.

7. Microprocesseur selon la revendication 6, dans lequel
le processeur (110) est également configuré pour : analyser le premier signal d'image pour obtenir une première image ; et
obtenir une valeur de pixel de chaque pixel dans la première image, et réaliser un calcul cumulatif sur toutes les valeurs de pixel dans la première image, ou réaliser un contrôle de redondance cyclique, CRC, sur toutes les valeurs de pixel, pour obtenir la première valeur de vérification.

8. Microprocesseur selon la revendication 6 ou 7,
dans lequel la seconde valeur de vérification est générée par le SOC de l'hôte du véhicule (110) sur la base d'une valeur de pixel de chaque pixel dans une image de fenêtre correspondant à la première icône.

9. Microprocesseur selon l'une quelconque des revendications 6 à 8, dans lequel
le processeur (110) est également configuré pour : déterminer, par recherche, si une image de fenêtre cible correspondant à la seconde valeur de vérification est stockée localement ; et si l'image de fenêtre cible est stockée, obtenir l'image de fenêtre cible, et obtenir le deuxième signal d'image sur la base de l'image de fenêtre cible.

10. Microprocesseur selon la revendication 9, dans lequel
l'interface de communication (130) est également configurée pour : lorsque le processeur détermine par recherche que l'image de fenêtre cible n'est pas stockée localement, envoyer un troisième signal d'image à l'affichage, dans lequel le troisième signal d'image est utilisé pour transmettre une image de fenêtre comprenant une icône d'invite d'exception.

11. Tableau de bord (120), comprenant un désérialiseur, un microprocesseur et un affichage, dans lequel le microprocesseur comprend un processeur (110) et une mémoire (120), et le processeur (110) est couplé à la mémoire (120) ;
la mémoire (120) est configurée pour stocker des instructions de programme informatique ; et
le processeur (110) est configuré pour exécuter les instructions stockées dans la mémoire (120), pour que le microprocesseur réalise le procédé selon l'une quelconque des revendications 1 à 5.

12. Support de stockage lisible par ordinateur, comprenant des instructions, dans lequel, lorsque les instructions sont exécutées sur un ordinateur, l'ordinateur réalise le procédé selon l'une quelconque des revendications 1 à 5.

13. Produit de programme informatique, dans lequel lorsque le produit de programme informatique est exécuté sur un ordinateur, l'ordinateur est activé pour réaliser le procédé selon l'une quelconque des revendications 1 à 5.
